Europäisches Patentamt

European Patent Office

Office européen des brevets

(11) Veröffentlichungsnummer: **0 437 745 A2**

# (12) EUROPÄISCHE PATENTANMELDUNG

(21) Anmeldenummer: **90124172.9**

(22) Anmeldetag: **14.12.90**

(51) Int. Cl.5: **C08L 25/04**, C08L 53/00,
C08L 23/02, B32B 27/32,
//(C08L25/04,53:00,23:02),
(C08L53/00,23:02,25:04),
(C08L23/02,25:04,53:00)

(30) Priorität: **17.01.90 DE 4001159**

(43) Veröffentlichungstag der Anmeldung:
**24.07.91 Patentblatt 91/30**

(84) Benannte Vertragsstaaten:
**BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Hoenl, Hans, Dr.**
**Hauptstrasse 69A**
**W-6719 Obersuelzen(DE)**
Erfinder: **Jenne, Helmut, Dr.**
**Grosser Moench 6**
**W-6905 Schriesheim(DE)**

(54) **Siegelfähige thermoplastische Formmasse.**

(57) Siegelfähige thermoplastische Formmasse, enthaltend
A:    5 bis 70 Gew.-% eines schlagzähen Polystyrolharzes A,
B:    5 bis 70 Gew.-% eines Blockcopolymeren B,
C:    1 bis 20 Gew.-% eines Gleitmittels C,
D:    5 bis 70 Gew.-% mindestens eines Homo- oder Copolymerisats D eines aliphatischen Olefins.

EP 0 437 745 A2

## SIEGELFÄHIGE THERMOPLASTISCHE FORMMASSE

Die Erfindung betrifft eine heißsiegelfähige Kunststoff-Folie mit einer siegelfähigen Schicht aus einem thermoplastischen Polystyrolharz.

Kunststoffbehälter für die Verpackung von Lebensmitteln müssen in vielen Fällen luftdicht verschlossen werden, um deren Haltbarkeit sicherzustellen. Als Verschluß werden insbesondere bei der Verpackung von Molkereiprodukten Aluminiumfolien verwendet, auf die ein Siegellack aufgetragen wird, der eine ausreichende Haftung auf den verschiedenen Arten von Kunststoffbehältern sicherstellt. Da Aluminium unempfindlich gegenüber Temperatureinflüssen ist, kann der Siegelvorgang bei beliebigen Temperaturen durchgeführt werden. Es ist lediglich darauf zu achten, daß die Siegelung so beschaffen ist, daß einerseits das Behältnis fest genug verschlossen ist, also z.B. beim Herabfallen des gefüllten Behälters nicht aufplatzt, andererseits aber der Verschluß auch noch leicht von Hand zu öffnen ist, so daß die Folie nicht zerreißt. Dabei ist von Bedeutung, daß die Siegelung über einen gewissen Verarbeitungsbereich, wie es die handelsüblichen Verschließanlagen verlangen, diese Festigkeitsanforderung erfüllt.

Außer Aluminiumfolien werden auch Kunststoff-Folien verwendet, die mit einem siegelfähigen Lack versehen werden. Je nach der Art des Kunststoffes, aus dem der zu siegelnde Behälter hergestellt ist, verwendet man entsprechende Siegellacke. So bringt man z.B. auf die derzeit für diesen Zweck meistverwendeten siegelfähigen Folien aus Hart-PVC eine Siegellackschicht auf Basis eines Acrylatharzes auf, dem zur Regulierung der Haftfestigkeit und des Aufschmelzpunktes noch Zusatzstoffe beigegeben werden.

Siegelfähige Kunststoff-Folien können im Gegensatz zu Aluminiumfolien auch thermogeformt werden. So ist es möglich, aus Kunststoff-Folien geformte Deckel herzustellen, die auf das zu verschließende Behältnis aufgesiegelt werden, aber nach dem Öffnen geeignet sind, dieses wieder zu verschließen.

Die derzeit verwendeten siegelfähigen Folien aus PVC haben jedoch einige Nachteile: Sie sind, da sie mit einem Siegellack zu versehen sind, verhältnismäßig teuer. Zudem sind die von der Siegelschicht herrührenden Restlösungsmittel aus dem Kunststoff nur mit erheblichem Aufwand zu entfernen. Dazu kommt, daß aus Gründen des Umweltschutzes zunehmend die Neigung besteht, PVC für Wegwerfverpackungen durch andere Thermoplaste zu ersetzen.

Bekannt sind auch Folien aus amorphem Polyethylenterephtalat, auf die eine heißsiegelfähige Lackschicht aufgebracht wurde. Diese siegelfähigen Kunststoff-Folien müssen zum Siegelgerät hin mit einer dünnen Schicht eines thermisch stabilen Schutzlackes versehen werden, um ein Kleben der Kunststoff-Folie an den Siegelbacken zu vermeiden.

In der DE-A-35 31 036 werden nach dem Koextrusionsverfahren herstellbare Kunststoff-Folien beschrieben, die eine siegelfähige Schicht aus einem schlagzähen Polystyrol, einem Blockcopolymerisat und einem Gleitmittel aufweisen.

Bei der Verwendung aller heißsiegelfähigen Kunststoff-Folien hat sich gezeigt, daß sie, verglichen mit Aluminiumfolien eine wesentlich engere Verarbeitungsbreite haben: Sind nämlich Siegeltemperatur und Siegelzeit zu niedrig, so erlaubt die Kunststoff-Folie keinen ausreichenden Wärmedurchgang und die Folie haftet nicht. Stellt man Siegeltemperatur und -zeit aber zu hoch ein, so schmilzt die Kunststoff-Folie auf und fließt unter dem zur Siegelung notwendigen Druck weg. Sie wird dann im Siegelbereich so dünn, daß sie schon bei geringer Belastung reißt und ein einwandfreies Öffnen und Wiederverschließen der Verpackung nicht mehr möglich ist. Zwischen diesen beiden Grenzbedingungen der Siegelung besteht bei all diesen siegelfähigen Kunststoff-Folien meist nur ein enger Bereich von 10 bis 20° C, der sicher eingehalten werden muß, um eine störungsfreie Produktion und einen einwandfreien Gebrauch der versiegelten Verpackung sicherzustellen. Die Praxis hat gezeigt, daß dies in einer Reihe von Fällen möglich ist; besonders bei Abfüllanlagen, bei denen gleichzeitig mehrere Becher versiegelt werden, ist aber eine ausreichend sichere Temperaturregelung nicht immer gewährleistet, da Temperaturunterschiede von 20° C und mehr zwischen den verschiedenen Kavitäten keine Ausnahme sind.

Daher wird schon lange versucht, heißsiegelfähige Folien z.B. aus Polystyrol herzustellen.

Es besteht daher die Aufgabe, eine heißsiegelfähige Formmasse und zwar im wesentlichen aus Polystyrol zu finden, die eine Siegelung unter solchen physikalischen Bedingungen ermöglicht, unter denen ein Wegfließen der Trägerfolien aus dem Siegelbereich nicht mehr möglich ist. Eine solche Formmasse muß insbesondere schon bei sehr tiefer Temperatur kleben. Die Siegelung muß unabhängig von den Siegelbedingungen eine möglichst gleiche Festigkeit haben und das Öffnen der Packung muß leicht und gleichmäßig erfolgen, ohne daß der Deckel bei diesem Vorgang zerreißt. Zudem soll die Siegelschicht nach Möglichkeit direkt, d.h. ohne Verwendung eines Klebers, auf z.B. einer üblichen Polystyrolträgerfolie haften. Andererseits soll aber auch die Möglichkeit bestehen, sie mittels Kleber auf andere als die Trägerfolie geeignete Substrate zur Herstellung von Siegelfolien aufzubringen. Außerdem soll die Verwendung von Lösungsmitteln zum Aufbringen der Klebeschicht vermieden werden.

Eine siegelfähige thermoplastische Formmasse für Polystyrol-Behälter beschreibt bereits die EP-A-215 333. Damit lassen sich jedoch keine Behälter aus Polyolefin, insbesondere Polypropylen versiegeln. Es besteht daher die weitere Aufgabe, für Behälter aus Polyolefin eine siegelfähige Formmasse zu entwickeln.

Es wurde nun gefunden, daß eine Formmasse, die im wesentlichen besteht aus

A: 5 bis 70 Gew.-% eines schlagzähen Polystyrolharzes A,

B: 5 bis 70 Gew.-% eines Blockcopolymeren B,

C: 1 bis 20 Gew.-% eines Gleitmittels C und

D: 5 bis 70 Gew.-% eines Homo- oder Copolymerisats eines aliphatischen Olefins D.

die gestellten Aufgaben zu lösen vermag.

Sie ermöglicht nicht nur eine Siegelung unter physikalischen Bedingungen, die eine thermische Schädigung des Trägermaterials vermeiden, sondern erfüllt auch die Forderung, über einen weiten Bereich der Verarbeitung ihre Siegelfestigkeit nur in engem Bereich zu verändern und stets ein einwandfreies Öffnen der versiegelten Packung zu ermöglichen. Zudem ist die erfindungsgemäße Formmasse thermoplastisch verarbeitbar und kann ohne Verwendung von Klebern bzw. Lösungsmitteln durch Kaschieren oder Coextrusion auf übliche Polystyrol-Trägerfolien oder andere Trägerfolien aufgebracht werden.

A, B, C und D sind die wesentlichen Bestandteile der Formmasse; andere Bestandteile können in untergeordneter Menge zugegen sein. Die Formmasse weist vorzugsweise folgende Zusammensetzung auf: 20 bis 60 Gew.-% A, 10 bis 50 Gew.-% B, 5 bis 15 Gew.-% C und 10 bis 50 Gew.-% D.

Komponente A

Als Komponente A zum Aufbau der erfindungsgemäßen Formmasse dient schlagzähes Polystyrolharz. Darunter ist zweiphasig aus einer Hartmatrix und einer Weichphase aufgebautes schlagzähes Polystyrol zu verstehen, das allgemein bekannt ist.

Die Hartmatrix der Komponente A besteht aus einem Styrol-Polymeren. Diese Hartmatrix macht, bezogen auf die Komponente A, 60 bis 95 Gew.-%, vorzugsweise 80 bis 95 Gew.-% aus. Als Monomeres zum Aufbau der Hartmatrix kommt insbesondere Styrol in Frage. Es können jedoch auch α-Methylstyrol oder p-Methylstyrol oder Mischungen substituierter Styrole verwendet werden, bevorzugt ist jedoch die ausschließliche Verwendung von Styrol, so daß die Hartmatrix bevorzugt aus Polystyrol besteht.

Die Hartmatrix entsteht in an sich bekannter Weise bei der Herstellung der Komponente A dadurch, daß eine Weichphase, d.h. ein Kautschuk, z.B. ein Polydien oder ein lineares Zweiblockcopolymerisat aus Dien oder Gemische zusammen mit dem die Hartmatrix später aufbauenden Styrol-Monomeren thermisch oder radikalisch polymerisiert wird. Dabei bilden sich Pfropfmischpolymerisate des Kautschuks (Weichphase) und ungepfropfte Styrol-Polymere, die Hartmatrix.

Die Hartmatrix kann eine Viskositätszahl $\eta_{sp}/c$ im Bereich von 50 bis 140, insbesondere im Bereich von 70 bis 120, aufweisen. Dies entspricht mittleren Molgewichten $(M_w)$ im Bereich von 100.000 bis 350.000, insbesondere 150.000 bis 300.000.

Die Weichphase liegt im Endergebnis fein dispergiert in der Hartmatrix vor. Die Art und Weise, wie eine Weichphase in einer Hartmatrix dispergiert werden kann, ist bekannt. Die Weichphase ist in einem Anteil von 5 bis 40 Gew.-%, vorzugsweise von 5 bis 20 Gew.-%, in der Hartmatrix vorhanden. Sie weist eine mittlere Teilchengröße im Bereich von 0,01 bis 10 $\mu$m, vorzugsweise im Bereich von 0,3 bis 8 $\mu$m auf. Bei dem genannten Teilchengrößenbereich handelt es sich um die mittlere Teilchengröße, bestimmt durch Auszählen einer elektronenmikroskopischen Aufnahme, also ein Zahlenmittel.

Bei der Weichphase handelt es sich somit um ein Pfropfmischpolymerisat aus dem(n) Monomeren der Hartmatrix, d.h. insbesondere von Styrol, auf einen Kautschuk oder auf ein Gemisch von Kautschuken, z.B. ein Gemisch aus einem elastomeren linearen Styrol-Butadien-Zwei-Blockcopolymeren und Polybutadien.

Als Weichphase ist Polybutadien und dessen Pfropfmischpolymerisat mit Styrol bevorzugt. Besonders geeignet sind Polybutadiene vom medium- oder high-cis-Typ mit Molekulargewichten im Bereich von 70.000 bis 450.000 (Gewichtsmittel). Vorzugsweise werden medium-cis-Polybutadiene mit Molgewichten von 300.000 bis 400.000 eingesetzt.

Als Weichphase ebenfalls gut geeignet ist ein lineares Zweiblockcopolymerisat bzw. dessen Pfropfmischpolymerisat mit Styrol.

Elastomere lineare Zwei-Blockcopolymerisate erhält man durch anionische Polymerisation mit Hilfe von Lithiuminitiatoren. Als vinylaromatische Monomere zum Aufbau des ersten Blockes kommen Styrol und substituierte Styrole in Betracht. Genannt seien Styrol, das bevorzugt alleine verwendet wird, o-, m- und p-Methylstyrol. Der zweite Block des Blockcopolymerisats ist vorzugsweise nur aus Butadien aufgebaut.

Das Zweiblockcopolymerisat kann z.B. einen Blockpolystyrolgehalt von 40 bis 90 Gew.-%, bezogen auf das Blockcopolymerisat, aufweisen (Rest jeweils Butadien). Es handelt sich bei dem genannten Blockcopolymerisat um ein solches mit sogenanntem scharfem Übergang. Es ist z.B. aus A. Echte, Angew. Makr. Chemie 58/59 175 (1977) bekannt, wie derartige Blockcopolymerisate erhalten werden können. Das Blockcopolymersat soll ein mittleres Molekulargewicht ($M_w$) von 100.000 bis 300.000, vorzugsweise von 150.000 bis 250.000, aufweisen.

Falls Gemische aus Polydienen und linearen Blockcopolymerisaten als Kautschuk verwendet werden, berechnet sich der Gesamtpolydienanteil aus dem Anteil z.B. des Polybutadiens und z.B. aus dem Butadienanteil, der in dem Zwei-Blockcopolymerisat enthalten ist. Dieser Gesamtpolydienanteil soll, bezogen auf die Komponente A im Bereich von 2 bis 30 Gew.-%, vorzugsweise 4 bis 15 Gew.-%, liegen.

Als praktisches Beispiel diene das folgende: Eine Mischung aus 8 Gew.-% Styrol-Butadienzweiblockcopolymerisat mit einem Butadiengehalt von 50 Gew.-% und 6 Gew.-% Homo-Polybutadien wird angewendet. Der Gesamtpolybutadienanteil beträgt dann 8 x 0.5 = 4 Gew.-% Polybutadien aus dem Zweiblockcopolymerisat und 6 Gew.-% aus dem Homopolymerisat des Butadiens, so daß der Gesamtpolybutadienanteil 10 Gew.-% ausmacht.

Besonders bevorzugt werden schlagfeste Polystyrolharze, die nach den in der US 3 658 946 (DE-A-17 70 392) beschriebenen Verfahren hergestellt werden, oder solche, die besonders gute Spannungsrißbeständigkeit aufweisen (vgl. US 4 144 204 (DE-A-25 25 019)). Auch die Verwendung schlagfesten Polystyrols mit transluzenten Eigenschaften, wie es z.B. in der US 4 282 334 (DE-A-26 13 352) beschrieben ist, ist möglich.

Selbstverständlich kann man aber auch Styrol-Butadienpfropfcopolymere mit niedrigerem Butadienanteil, z.B. unter 40 Gew.-% oder schließlich reines Styrol-Homopolymerisat verwenden. Man kann dann durch einen erhöhten Anteil an Styrol-Butadien-Blockcopolymer ebenfalls noch zu verwendbaren Siegelschichten kommen. Dieser Weg ist aber weniger wirtschaftlich.

Komponente B

Die Komponente B ist ein Blockcopolymer, aufgebaut aus mindestens einem Block eines vinylaromatischen Monomeren, insbesondere aus der Gruppe von Styrol, $\alpha$-Methylstyrol, kernalkyliertem Styrol wie p-Methylstyrol oder den Mischungen hieraus und mindestens einem Block aus Butadien oder Isopren oder deren Gemisch.

Das Blockcopolymere kann aus 2 oder 3 Blöcken bestehen, es kann linear oder verzweigt aufgebaut sein. Beispielsweise sind geeignete Produkte und Verfahren zu deren Herstellung beschrieben in: DE-A-10 84 919, GB 1 098 570 und US 3 507 934 (DE-A-16 45 406), GB 888 624 und GB 953 750 (DE-A-14 20 698), US-A-3 030 364. Verzweigte Produkte sind aus GB 1 222 783 und US 3 614 836 (DE-A-19 34 348), GB 1 268 527 und US 3 639 517 (DE-A-19 59 922) oder GB 1 556 234 und US 4 167 545 (DE-A-25 50 227) bekannt.

Auch Verfahren zur Herstellung verzweigter Blockcopolymerisate sind in den genannten Schriften oder in der DE-A-32 48 746 beschrieben.

Bevorzugt werden Styrol-Isopren-Blockcopolymerisate mit scharfem oder verschmiertem Übergang.

Als Styrol-Isopren-Block-Copolymer kann dabei jedes Blockcopolymere ohne Einschränkung auf seinen Aufbau eingesetzt werden, das nach dem (sog. anionischen) Lösungspolymerisationsverfahren mit einer Alkyl-Lithium-Verbindung als Katalysator erhalten wird. Dabei können sowohl elastomere Styrol-Butadien- und Styrol-Isopren-Blockcopolymere mit einem Dien-Anteil von über 50 Gew.-% als auch harzartige Styrol-Butadien- und Styrol-Isopren-Blockcopolymere mit einem Dienanteil von unter 50 Gew.-% verwendet werden. Verwendet man elastomere Styrol-Dien-Blockcopolymere mit einem Dien-Anteil von über 50 Gew.-%, so liegt deren Anteil im Gemisch bevorzugt zwischen 20 und 40 Gew.-%, kann jedoch, je nach Anforderungen, auch höher oder niedriger sein. Harzartige Styrol-Dien-Blockcopolymere mit Styrolgehalten über 50 Gew.-%, insbesondere solche mit etwa 65 bis 95 Gew.-% Styrol, sollen bevorzugt in einer Menge von 40 bis 60 Gew.-% in der erfindungsgemäßen Formmasse enthalten sein.

Komponente C

Als Gleitmittel lassen sich prinzipiell alle niedermolekularen Stoffe verwenden, die in der erforderlichen Menge mit den Komponenten A und B in der Formmasse verträglich sind. Hierzu zählen z.B. Mineralöle, aromatische oder aliphatische Alkohole oder Ester, wie Dodecylalkohol, Butylstearat, Di-Ethylhexa-phthalat usw.

Ferner seien genannt Ethylenoxid-Propylenoxid-Blockcopolymerisate; Microhartwachse; Ethylen-bis-Stearylamid (Acrawachs); Metallseifen, insbesondere der Erdalkalien und des Zinks; Mineralöle auf Basis von insbesondere naphthenischen und paraffinischen Kohlenwasserstoffen (insbesondere die technischen und medizinischen Weißöle); Silikonöle mit Viskositäten im Bereich von 0,5 bis 50.000 mPas.

## Komponente D

Als Homo- oder Copolymerisate von $\alpha$-Olefinmonomeren kommen die des Ethylens und Propylens in Frage. Es seien genannt Polyethylen von hoher Dichte (Bereich 0,94 bis 0,97 g/cm$^3$) mit Schmelzflußindices (gemessen nach BS 2782, Teil 105 C) von 0,001 bis 2,0 dg/Minute oder die Copolymerisate von Ethylen und geringe Mengen (ca. 10%) Propylen. Die Herstellung derartiger Produkte ist bekannt.

Bevorzugt wird jedoch isotaktisches Propylen angewendet, z.B. das nach dem sog. Gasphasenverfahren unter Verwendung von Natta-Katalysatoren hergestellte, das Schmelzindices im Bereich von 0,1 bis 90,0 g/10 min. (MFI 190/5) aufweisen kann. Besonders bevorzugt sind dabei Produkte, deren ataktischer Anteil zwischen 0,1 und 20 Gew.-% liegt (gemessen als xylollöslicher Anteil unter Standardbedingungen).

Die Formmasse kann weiterhin übliche Zusatzstoffe enthalten. Genannt seien z.B., Antistatika, Entformungshilfsmittel, Pigmente, Antioxidantien und Füllstoffe, d.h. Stoffe, die keiner der Komponenten A bis D zuzuordnen sind.

## Herstellung der Formmasse

Die erfindungsgemäße heißsiegelfähige Formmasse wird durch Mischen der Bestandteile A, B, C und D z.B. in einem Misch-Extruder homogenisiert und granuliert. Das erhaltene Granulat wird entweder nach dem Folienblasverfahren zu einer etwa 25 bis 75 $\mu$m dicken Folie verarbeitet, die anschließend auf die Trägerfolie aufkaschiert wird oder sie wird durch Extrusionskaschieren heiß auf die vorgefertigte Trägerfolie laminiert. Wirtschaftlicher ist jedoch die Herstellung der Siegelfolie auf einer Coextrusionsanlage, wobei für die erfindungsgemäßen Gemische alle Methoden der Coextrusion geeignet sind.

## Verwendung der Formmasse

Die erfindungsgemäße Formmasse hat insbesondere die Eigenschaft, heißsiegelfähig zu sein. Sie findet daher Verwendung im weitesten Sinne zur Herstellung von Verbunden mit einem Träger, insbesondere einer Trägerfolie.

Als Trägerfolie sind alle thermoplastisch verarbeitbaren Stoffe auf Basis von Styrol und Butadien geeignet, also schlagfestes Polystyrol, Styrol-Butadien-Blockcopolymere, Mischungen aus Styrol-Homopolymerisaten oder Styrol-Butadien-Pfropfcopolymerisaten mit Styrol-Butadien-Pfropfcopolymerisaten oder mit Styrol-Butadien-Blockcopolymeren usw. Auf diesen Stoffen haftet die heißsiegelfähige Schicht ohne Kleber.

Als Trägerfolien lassen sich aber auch andere Thermoplaste auf Basis vinylaromatischer Verbindungen oder Olefin-Polymere oder Polymere auf Basis von Estern oder Amiden verwenden. In diesen Fällen ist die Heißsiegelschicht i.a. jedoch mit Hilfe eines Klebers mit der Trägerfolie zu verbinden.

Durch Verbinden der erfindungsgemäßen Formmasse (in Form einer Folie) mit einer Trägerfolie resultieren Heißsiegelfolien.

Die so entstandenen Heißsiegelfolien werden auf den üblichen, für das Heißsiegeln verwendeten Verschließeinrichtungen auf Behälter aus Olefin-Polymerisaten, z.B. aus Polypropylen aufgesiegelt. Die Siegelbedingungen sind bei vorgegebener Form des Siegelkopfes durch die Temperatur des Siegelkopfes, den Druck während des Schweißvorganges und die Dauer desselben, beschrieben. Die Siegelbedingungen sind stark abhängig von der Dicke der Siegelfolie. Geeignete Siegelbedingungen liegen bei Temperaturen zwischen 160$^\circ$C und 250$^\circ$C, einem Druck zwischen 1,0 und 4 atü sowie einer Siegelzeit von 0,4 bis 2,0 s. Vor dem Heißsiegeln werden die Siegelfolien zweckmäßig mit einer Lackschicht versehen, um das Kleben der Folie am Siegelkopf zu vermeiden.

Statt mit einer Lackschicht können die mit den erfindungsgemäßen Formmassen hergestellten Heißsiegelfolien auch mit einer weiteren Schicht versehen sein. Diese Schicht sollte hochschmelzend sein und kann entweder durch Kaschieren oder nach dem Verfahren der Coextrusion in einem Arbeitsgang mit der Herstellung der Heißsiegelfolie verbunden werden. Dadurch vermeidet man das Aufbringen eines Schutzlackes in einem nachfolgenden Arbeitsgang und es hat sich in einer zunächst unerwarteten Weise gezeigt, daß eine solche Kunststoffschicht auch das Wegfließen der niedriger schmelzenden Hauptschicht der siegelfähigen Kunststoff-Folie bei selbst sehr hohen Siegeltemperaturen vermeidet, im Gegensatz zu dem Verfahren, bei dem ein Schutzlack aufgebracht werden wird.

Der Aufbau einer solchen, bevorzugt dreischichtigen Verbundfolie umfaßt demnach, bezogen auf die Gesamtstärke der Folie 1 bis 50% einer erfindungsgemäß heißsiegelnden Formmasse, bis 95% einer Trägerschicht, und 1 bis 99% einer hochschmelzenden und das Kleben der Heißsiegelfolie am Siegelkopf verhindernden Masse.

Eventuell kann die Schicht 2 entfallen oder es kann eine weitere Schicht eines Haftvermittlers hinzukommen, die die Verbindung von jeweils zweien der Schichten 1, 2 und 3 herstellt.

Mit der hochschmelzenden Schicht wird erreicht, daß die erfindungsgemäße Kunststoff-Folie praktisch in derselben Weise und auf denselben Abfüllanlagen angewendet werden kann wie eine siegelfähige Aluminiumfolie, ohne daß langwierige Veränderungen an den Abfüllanlagen notwendig sind. Damit werden wesentliche Hindernisse für die Anwendung solcher siegelfähiger Kunststoff-Folien in der Praxis beseitigt. Die Vorteile der nach diesem Verfahren hergestellten gegenüber den bisher verwendeten Kunststoff-Folien sind somit deren unproblematische Verarbeitung und Anwendung und das Vermeiden des nachträglichen Auftragens eines Siegellacks. Die Vorteile gegenüber den siegelfähigen Aluminiumfolien sind der weit niedrigere Energieverbrauch für die Herstellung, die Möglichkeit des Wiederverschließens angebrauchter Verpackungen mittels thermogeformter, siegelfähiger Kunststoffdeckel, bessere Bedruckbarkeit und die Vermeidung von Lösungsmitteln.

Es kann notwendig sein, bei Bedruckung einen Schutzlack im Siegelbereich vorzusehen. Auch kann es nützlich sein, besonders bei zusätzlichen Kunststoffschichten mit einem Schmelzpunkt unter 250°C, durch einen geeigneten Lack die Verarbeitungsbreite weiter zu verbessern.

Die hochschmelzende Schicht soll, wie gesagt, das Kleben der Heißsiegelfolien am Siegelkopf verhindern. Sie ersetzt aber nicht nur einen Schutzlack, sondern sie erhöht auch in überraschender Weise die Verarbeitungsbreite der siegelfähigen Kunststoff-Folie in einem Maße, daß selbst bei sehr hohen Siegeltemperaturen und Siegelzeiten ein Wegfließen der Trägerschicht verhindert wird und so eine störungsfreie Verarbeitung und eine problemlose Anwendung der Heißsiegelfolien ermöglicht wird. Als Komponente 3 der erfindungsgemäßen heißsiegelfähigen Kunststoff-Folien eignen sich alle thermoplastisch verarbeitbaren Kunststoffe, deren Schmelzpunkt oder Erweichungsbereich oberhalb von 200°C, bevorzugt oberhalb von 230°C liegt. Man kann z.B. folgende Folienmaterialien verwenden:

| Kunststoff, übliche Bezeichnung | Chemische Zusammensetzung | Schmelztemperatur, °C |
|---|---|---|
| Polyamid 6 | Polycaprolactam | 220 |
| Polyamid 6.6 | Polyhexamethylenadipinamid | 255 |
| Polyamid, copolymerisiert mit Butylenterephthalsäureester | Basis Hexamethylendiamin, Caprolactam, Terephthalsäure | 298 |
| Polybutylenterephthalat | Kondensat aus Terephthalsäure oder Dimethylphthalsäure und 1.4-Butandiol | 220 bis 225 |

Ferner seien genannt: Polyphenylenoxid und dessen Mischungen mit Polystyrol, Polysulfone, Polyethersulfone, Polyetherketone, LC-Polymere, Polyetherimide, kristallines Polyethylenterephthalat, Polyphenylensulfid, Polyamid-Imid-Copolymere oder Polyamid der Struktur von Polyamid 6.12, 11, 4.6 usw., sofern die Schmelztemperatur oder der Erweichungsbereich über 200°C liegt.

Kleber bzw. Haftvermittler

Je nach Art der zu verbindenden Materialien kann zur festen Verbindung der einzelnen Schichten ein - bevorzugt thermoplastischer - Kleber oder Haftvermittler (HV) notwendig sein. Für die Verbindung sind erfahrungsgemäß dann keine HV notwendig, wenn der Träger ein nur aus Styrol und Butadien aufgebautes Polymerisat mit unter 15% weiterer Comonomerer ist. Für die Verbindung der siegelfähigen Schicht mit Polyolefinen haben sich ansonsten Ethylen-Vinylacetat-Copolymerisate mit einem Vinylacetat-Anteil von über 10% oder Styrol-Butadien-Blockcopolymerisate mit überwiegendem Anteil an Butadien als geeignet erwiesen.

Die siegelfähige Schicht kann mit Hilfe von Styrol-Maleinsäureanhydrid-Copolymeren mit Polyamid verbunden werden oder mit Hilfe von Styrol-Butadien-Blockcopolymeren mit Polyestern wie Polyethylenterephthalat, Polybutylenterephthalat.

Schließlich kann ein Bestandteil der erfindungsgemäßen Verbundfolie z.B. auch eine weitere, als Gas- oder Wasserdampfsperre eingebaute Schicht aus einem Thermoplasten mit hoher Gas- und/oder Wasserdampfdichte sein. Diese Schicht schützt das Füllgut z.B. vor Austrocknen oder vor Beeinflussung durch Sauerstoff. Beispiele sind Schichten aus Ethylen-Vinylalkohol-Copolymerisaten, die eine hohe Gasdichtigkeit haben oder aus thermoplastisch verarbeitbaren PVDC-Copolymerisaten mit hoher Gas- und Wasserdampfdichte usw. Eine solche Schicht ist, wenn nötig, ebenfalls mit einem geeigneten Haftvermittler mit den benachbarten Komponenten zu verbinden.

Als Hilfsschicht ist ferner eine eigene, weitgehend lichtundurchlässige oder sonst eingefärbte Schicht möglich, die die Füllgüter etwa vor dem Einfluß von Licht schützt. Zu diesem Zweck versetzt man eines der Materialien mit geeigneten Pigmenten, bevorzugt Ruß oder Gemische von Ruß mit Titandioxid bzw. weiteren Pigmenten oder fügt eine zusätzliche, mit Pigmenten versehene Schicht ein; dies ermöglicht eine Haftung ohne HV.

Als weitere Schichten sind schließlich möglich z.B. solche mit anti-elektrostatischer Ausrüstung, Schichten mit verbesserter Bedruckbarkeit oder verbesserter Kratzfestigkeit, Schichten mit hoher Schlagfestigkeit usw.

Die erfindungsgemäße heißsiegelfähige Verbundfolie wird bevorzugt nach dem Coextrusionsverfahren hergestellt. Dieses Verfahren ist bekannt. Die Coextrusion kann bei Massetemperaturen zwischen etwa 170°C und 350°C erfolgen. Dabei werden die einzelnen Komponenten in verschiedenen Extrudern aufgeschmolzen und entweder in Mehrfachbreitschlitz- oder Ringdüsen zusammengeführt oder es erfolgt die Zusammenführung der Schicht(en) in einem Adapter.

Daneben besteht auch die Möglichkeit, eine oder mehrere Schichten durch Kaschieren auf die andere(n) extrudierten Schicht(en) aufzubringen.

Bei der Extrusion kann die Dicke der einzelnen Schichten z.B. durch Variation der Extruderdrehzahlen den Anforderungen an die fertigen Folien angepaßt werden.

Die so entstandenen Heißsiegelfolien werden auf den üblichen, für das Heißsiegeln verwendeten Verschließeinrichtungen auf Behälter aus Styrolpolymerisaten, z.B. aus Styrolhomopolymerisat, Styrol-Butadien-Pfropfpolymerisat oder Blockcopolymerisat bzw. Mischungen aus diesen Stoffen aufgesiegelt. Die Behälter können auch aus anderen Styrolpolymerisaten bestehen, beispielsweise solchen, die einen gewissen Anteil an Copolymeren, wie Acrylnitril enthalten. Sehr häufig werden auch für die Behälter selbst Mehrschichtfolien verwendet.

Die in den Beispielen und Vergleichsversuchen genannten Parameter wurden wie folgt bestimmt:

1. Siegelbedingungen bei unterschiedlichen Temperaturen des Siegelkopfes in °C, Drücken (bar) und Zeiten (s). Die Folien wurden auf handelsübliche thermogeformte Verpackungsbecher aus Polypropylen aufgesiegelt.

2. Bestimmung des Berstdruckes

Unter verschiedenen Siegelbedingungen wurden Verpackungsbecher verschlossen. Zur Bestimmung der Festigkeit der Siegelverbindung wurde ein Berstdrucktest durchgeführt. Dazu wurde mit Hilfe einer geeigneten Vorrichtung durch Druckluft ein meßbarer Überdruck in dem verschlossenen Behälter erzeugt. Die Apparatur besteht im wesentlichen aus einem Manometer mit Schleppanzeiger und einer Druckluftleitung, die mittels einer Gummidichtung an eine im Becher angebrachte Öffnung angeschlossen sind. Der Druck wurde so lange gesteigert, bis sich die Siegelnaht öffnete. Diesen Wert nennt man den Berstdruck.

3. Bestimmung der Fallhöhe

Verpackungsbecher wurden mit Wasser gefüllt und unter verschiedenen Bedingungen versiegelt. Die Fallhöhe in cm bis zum Aufplatzen der Siegelung wurde bestimmt.

4. Bestimmung der Abschälfestigkeit vom Becher

Verpackungsbecher wurden unter verschiedenen Bedingungen versiegelt und mit einer speziell angefertigten Vorrichtung die Abschälfestigkeit der Siegelfolie vom Becher bestimmt. Dazu wurden die Becher auf den Tisch einer Universal-Druck- und Zugprüfmaschine gestellt und festgelegt. Eine vorstehende Ecke des aufgesiegelten Deckels wurde gefaßt und über eine Verlängerung mit der oberen Spannbacke der Prüfmaschine verbunden. Mit einer Beanspruchungsgeschwindigkeit von 10 mm/min wurde die Kraft aufgebaut und der Deckel abgezogen. Festgehalten wurde die Kraft in [N] bis zum ersten Anriß und die Weiterreißkraft an der Siegelnaht in der Deckelmitte.

Für die Herstellung erfindungsgemäßer Formmassen und von Vergleichsproben wurden die nachfolgend beschriebenen Produkte verwendet:

A) ein schlagfestes Polystyrol mit einem Polybutadiengehalt von 8 Gew.-%, Teilchengröße von 0,1 bis 15 $\mu$m, mittlere Teilchengröße 2 bis 3 $\mu$m

B) ein lineares Styrol-Isopren-Dreiblock-Polymerisat (SIS), hergestellt durch anionische Polymerisation

Styrolgehalt 14 Gew.-%
Isoprengehalt 86 Gew.-%
mit scharfem Übergang.
Viskositätszahl: 130 ml/g
$M_N$ = 215.000
$M_W$ = 223.000

C) Mineralöl in Form von Weißöl nach DAB6

D) ein nach dem sog. Gasphasenverfahren hergestelltes Polypropylen mit dem MFI (190/5) von 12 g/10 min und einem in Xylol bestimmten ataktischen Anteil von 16 Gew.-% (vgl. Ogawa T., Hoshino S., J. Appl. Pol. Sci 17, 2235 (1973)).

Beispiele 1 bis 12

In einem Taumelmischer wurden bei Raumtemperatur aus den Komponenten A, B, C und D durch ständiges Mischen die in Tabelle 1 angeführten erfindungsgemäßen Formmassen 1 bis 12 gemischt. Die Homogenisierung und Granulierung erfolgte in einem sog. Co-Kneter. Das Granulat wurde mittels Adapter auf einer Coextrusions-Anlage auf eine Trägerfolie aus einer Mischung von SB-Harz und Styrol-Butadien-Blockcopolymer im Verhältnis 80:20 hergestellt. Die Trägerschicht war 240 $\mu$m dick, die Siegelschicht 20 $\mu$m aufgetragen. Mit den so erhaltenen heißsiegelfähigen Folien wurden durch Tiefziehen hergestellte Becher versiegelt und an diesen und an der Trägerfolie die in der Tabelle 2 genannten Parameter bestimmt.

Vergleichsversuche 1 bis 5

Für die Vergleichsversuche 1 bis 3 wurden handelsübliche Aluminium-Siegelfolien verwendet und unter verschiedenen, in der Tabelle angegebenen Bedingungen auf die auch für die Beispiele verwendeten Verpackungsbecher aufgesiegelt und die verschiedenen Messungen durchgeführt. Die Vergleichsversuche 4 und 5 wurden mit handelsüblichen Siegelfolien aus PVC durchgeführt, die mit einem Siegellack auf Basis von Acrylatharz und PVC beschichtet waren und auf die gleiche Weise untersucht.

Tabelle 1

Erfindungsgemäße Beispiele; Mengenangaben sind Gewichtsteile

| Beispiel Nr. | Komponente A [Gew.-%] | Komponente B [Gew.-%] | Komponente C [Gew.-%] | Komponente D [Gew.-%] |
|---|---|---|---|---|
| | A | B | C | D |
| 1 | 25 | 40 | 10 | 25 |
| 2 | 35 | 30 | 10 | 25 |
| 3 | 45 | 20 | 10 | 25 |
| 4 | 35 | 40 | 10 | 15 |
| 5 | 45 | 30 | 10 | 15 |
| 6 | 55 | 20 | 10 | 15 |
| 7 | 30 | 40 | 5 | 25 |
| 8 | 40 | 30 | 5 | 25 |
| 9 | 50 | 20 | 5 | 25 |
| 10 | 40 | 40 | 5 | 15 |
| 11 | 50 | 30 | 5 | 15 |
| 12 | 60 | 20 | 5 | 15 |

9

Tabelle 2

| Beispiele | Siegelbedingungen | | | Berstdruck [atü] | Fallhöhe [cm] | Schälfestigkeit | |
|---|---|---|---|---|---|---|---|
| | Temperatur [°C] | Druck [atü] | Zeit [s] | | | Kraft bis zum 1. Anriß [N] | Weiterreiß-kraft in Deckelmitte [N] |
| 1a | 210 | 2 | 0,5 | 0,51 | 90 | 14,8 | 2,4 |
| 1b | 210 | 2 | 1,0 | 0,58 | 100 | 18,0 | 2,5 |
| 1c | 210 | 2 | 1,5 | 0,80 | 101 | 21,3 | 2,9 |
| 2a | 210 | 2 | 0,5 | 0,49 | 90 | 14,0 | 1,9 |
| 2b | 210 | 2 | 1,0 | 0,50 | 95 | 17,5 | 2,0 |
| 2c | 210 | 2 | 1,5 | 0,59 | 99 | 17,8 | 2,0 |
| 3a | 210 | 2 | 0,5 | 0,45 | 90 | 13,9 | 1,9 |
| 3b | 210 | 2 | 1,0 | 0,48 | 93 | 12,0 | 1,9 |
| 3c | 210 | 2 | 1,5 | 0,71 | 101 | 20,8 | 2,0 |
| 4a | 220 | 2 | 0,5 | 0,49 | 92 | 15,1 | 3,0 |
| 4b | 220 | 2 | 1,0 | 0,59 | 102 | 17,4 | 2,9 |
| 4c | 220 | 2 | 1,5 | 0,78 | 100 | 20,9 | 1,9 |
| 5a | 220 | 2 | 0,5 | 0,50 | 91 | 14,0 | 2,0 |
| 5b | 220 | 2 | 1,0 | 0,52 | 96 | 17,8 | 2,1 |
| 5c | 220 | 2 | 1,5 | 0,60 | 100 | 18,0 | 1,8 |
| 6a | 220 | 2 | 0,5 | 0,48 | 91 | 13,8 | 1,9 |
| 6b | 220 | 2 | 1,0 | 0,48 | 92 | 11,9 | 2,4 |
| 6c | 220 | 2 | 1,5 | 0,44 | 99 | 21,0 | 2,5 |
| 7 | 220 | 2 | 1,0 | 0,57 | 103 | 19,7 | 2,4 |
| 8 | 220 | 2 | 1,0 | 0,51 | 102 | 19,0 | 2,1 |
| 9 | 220 | 2 | 1,0 | 0,60 | 97 | 18,8 | 2,5 |
| 10 | 220 | 2 | 1,0 | 0,61 | 105 | 18,7 | 2,4 |
| 11 | 220 | 2 | 1,0 | 0,58 | 93 | 18,7 | 1,7 |
| 12 | 220 | 2 | 1,0 | 0,52 | 90 | 17,1 | 2,3 |
| Vergleichsversuche | | | | | | | |
| 1 | 210 | 2 | 1,0 | 0,49 | 92 | 28,0 | 3,9 |
| 2 | 210 | 2 | 1,0 | 0,51 | 95 | 27,9 | 3,7 |
| 3 | 210 | 2 | 1,0 | 0,50 | 87 | 29,8 | 3,7 |
| 4 | 210 | 2 | 1,0 | 0,47 | 80 | 16,1 | 1,1 |
| 5 | 210 | 2 | 1,0 | 0,61 | 77 | 17,3 | 1,2 |

## Patentansprüche

1. Siegelfähige-thermoplastische Formmasse enthaltend, jeweils bezogen auf die Summe aus A, B, C und D

    A:     5 bis 70 Gew.-% eines schlagzähen Polystyrolharzes A,

B:    5 bis 70 Gew.-% eines Blockcopolymeren B,

C:    1 bis 20 Gew.-% eines Gleitmittels C und

D:    5 bis 70 Gew.-% eines Homo- oder Copolymerisats eines aliphatischen Olefins D.

2.   Formmasse nach Anspruch 1, enthaltend 20 bis 60 Gew.-% A, 10 bis 50 Gew.-% B, 5 bis 15 Gew.-% C und 10 bis 50 Gew.-% D.

3.   Formmasse nach Anspruch 1, enthaltend als Polystyrolharz A ein Pfropfmischpolymerisat, aufgebaut aus, bezogen auf A, 60 bis 95 Gew.-% einer Hartmatrix und 5 bis 40 Gew.-% einer Weichphase, die eine mittlere Teilchengröße im Bereich von 0.3 bis 8 $\mu$m aufweist.

4.   Verbundfolie aus einer Schicht der Formmasse gemäß Anspruch 1 und einer nichtsiegelnden-Trägerschicht.